# EUROPÄISCHE PATENTANMELDUNG

(11) **EP 2 355 295 A2**
(43) Veröffentlichungstag der Anmeldung: **10.08.2011**
(21) Anmeldenummer: 10194134.2
(22) Anmeldetag: 08.12.2010
(51) Int. Cl.: H02J 3/32, H02J 7/00

(54) **Laderegler**

(30) Priorität: 29.01.2010 DE 102010006217
(71) Anmelder: Siemens Aktiengesellschaft, 80333 München (DE)
(72) Erfinder: Fiegert, Michael, 81739, München (DE); Grundmann, Thilo, 81541, München (DE)

(57) **Zusammenfassung**

Die Erfindung betrifft einen zwischen einem Hauptverteileranschluss (DNW) und einem Verbraucherverteiler (LD) angeordneten Laderegler. Der Laderegler erfasst einen durch den mindestens einen Verbraucher (LD) fließenden Laststrom (LC). Dem Laderegler (CHC) ist ein Energiespeicher (EYS) zugeordnet, dessen Ladezustand durch den Laderegler (CHC) erfasst wird. Durch den Laderegler (CHC) ist ein Ladestrom (CC) zwischen dem Laderegler (CHC) und dem Energiespeicher (EYS) einstellbar, wobei ein im Hauptverteileranschluss (DNW) fließender Bezugsstrom (SC) sich als Summe des Laststroms (LC) und des auf die Spannung des Energiespeichers (EYS) normierten Ladestroms (CC) ergibt. Der zeitliche Verlauf des Ladestrom (CC) wird dabei vom Laderegler (CHC) so eingestellt, dass einem Verbraucher-charakteristischen zeitlichen Verlauf des Laststroms (LC) entgegenwirkt wird.

## Beschreibung

Die Erfindung betrifft einen Laderegler zur Anordnung zwischen eine Stromhauptverteileranschluss und mindestens einem Verbraucher.

Im Stand der Technik sind Einrichtungen zur Messung einer von einem Verteilnetzbetreiber bezogenen elektrischen Energie bekannt.

Derzeit ist eine Einführung sogenannter »intelligenter Stromzähler« geplant. Ein intelligenter Stromzähler, in der Fachwelt auch als »Smart Meter« bekannt, ist ein elektronischer Stromzähler, welcher über Einrichtungen verfügt, durch die der »Zählerstand«, also eine in einem bestimmten Zeitraum bezogene elektrische Energie, an einen Verteilnetzbetreiber übermittelt werden kann, ohne dass hierzu ein vormals notwendiges Ablesen des Stromzählers und Mitteilen des Zählerstands an den Verteilnetzbetreiber vonnöten ist.

Neben unstrittigen Vorteilen von intelligenten Stromzählern gibt es indes starke Bedenken bezüglich des Datenschutzes von Stromabnehmern.

Mithilfe einer Übermittlung von Verbrauchsdaten in engen Zeitabständen, beispielsweise im Sekundenbereich, ist eine Auswertung und Erstellung eines detaillierten Verbraucherprofils möglich.

Die Ermittlung eines derartigen Verbraucherprofils kann einem Verteilnetzbetreiber eine zeitnahe Ermittlung des Energiebedarfs erleichtern und kann auch seitens des Abnehmers durchaus erwünscht sein. Der Abnehmer erhält beispielsweise einen Einblick in die tageszeitlichen Verlauf seines Energieverbrauchs und damit die Möglichkeit, unnötigem Energieverbrauch entgegenzuwirken.

Andererseits sind mit einem detaillierten Verbraucherprofil technische Möglichkeiten geschaffen, die sogar eine Auswertung persönlicher Gewohnheiten ermöglichen. Zu diesen persönlichen Gewohnheiten können z.B. Schlafenszeiten, Essgewohnheiten usw. zählen. Letztgenannte Essgewohnheiten lassen sich beispielsweise über charakteristische Verbrauchskurven von Mikrowellenherden oder Stromwärmeherden ermitteln.

Technisch ist es weiterhin sogar möglich, ein Verzeichnis von gesehenen Fernsehsendungen zu erstellen, da einer jeweiligen Fernsehsendung eine charakteristische Verbrauchskurve zuordenbar ist, welche sich anhand der Verbrauchskurve ermitteln lässt.

Bei industriellen Stromabnehmern könnten firmenvertrauliche Tatsachen ermittelt werden, beispielsweise dahingehend, wie gut welche Teile einer Fabrik ausgelastet sind.

Unbeschadet von gesetzlichen Datenschutzvorgaben liegen mit einer Installation eines intelligenten Stromzählers technische Voraussetzungen vor, durch welche Verteilnetzbetreibern oder auch Dritten Möglichkeiten zur Verfügung stehen, höchst private Daten zu ermitteln.

Derzeit existieren keine technischen Mittel, welche eine Ermittlung von Anwenderprofilen anhand der Verbrauchswerte von Stromabnehmern unterbinden könnten.

Die der Erfindung zugrunde liegende Aufgabe besteht darin, Maßnahmen anzugeben, welche eine Ermittlung von Anwenderprofilen anhand der Verbrauchswerte von Stromabnehmern verhindern.

Eine Lösung der Aufgabe erfolgt durch einen Laderegler mit den Merkmalen des Patentanspruchs 1.

Der erfindungsgemäße Laderegler ist zwischen einem Hauptverteileranschluss und einem mindestens einen Verbraucher verbindenden Verbraucherverteiler angeordnet.

Vom Laderegler wird ein Laststrom erfasst, der durch mindestens einen Verbraucher fließt. Eine Auswertung eines zeitlichen Verlaufs dieses Laststroms in engen Zeitabständen, beispielsweise im Sekundenbereich, würde, wie oben erläutert, ohne weitere Maßnahmen eine Auswertung und Erstellung eines detaillierten Verbraucherprofils ermöglichen, welche gemäß der Erfindung unterbunden wird.

Erfindungsgemäß ist dem Laderegler ein Energiespeicher, beispielsweise ein Akkumulator, zugeordnet, dessen Ladezustand durch den Laderegler erfasst wird. Ein Ladezustand des Energiespeichers lässt sich beispielsweise anhand der am Energiespeicher abfallenden elektrischen Spannung ermitteln.

Erfindungsgemäß wird vom Laderegler ein Ladestrom zwischen dem Laderegler und dem Energiespeicher eingestellt, dessen auf die Spannung des Energiespeichers normierte Größe rechnerisch eine Differenz des durch den Hauptverteileranschluss fließenden Bezugsstroms und des Laststroms ist. Die auf die Spannung des Energiespeichers normierte Größe des Laststroms, mit anderen Worten, der normierte Ladestrom, berücksichtigt dabei ein eventuell unterschiedliches Spannungsniveau des Energiespeichers und der am Hauptverteileranschluss sowie an den Verbrauchern anliegenden Spannung (Netzspannung). Mit anderen Worten ergibt sich der durch einen Stromzähler messbare Bezugsstrom als eine Summe des Laststroms und des normierten Ladestroms.

Erfindungsgemäß ist vorgesehen, den zeitlichen Verlauf des Ladestroms durch den Laderegler so einzustellen, dass einem Verbraucher-charakteristischen zeitlichen Verlauf des Laststroms entgegenwirkt wird.

Dies ist einerseits möglich durch eine Aufladung des Energiespeichers mit einem geeigneten zeitlichen und betragsmäßigen Verlauf des Ladestroms oder auch durch eine dementsprechende Entladung des Energiespeichers.

Ein wesentlicher Vorteil des erfindungsgemäßen Ladereglers ist darin zu sehen, dass der vom Verteilnetzbetreiber gelieferte zeitliche und betragsmäßige Verlauf des Bezugsstroms durch eine einfache Maßnahme derart zu verfremden ist, dass die Möglichkeit einer Auswertung dieses Bezugsstroms technisch unterbunden wird.

Der erfindungsgemäße Laderegler bietet darüber hinaus einen durchaus überraschenden zusätzlichen Vorteil. Mit einer zunehmenden dezentralen Einspeisung von alternativer elektrischer Energie in das Verbundnetz, beispielsweise aus photovoltaischen Einrichtungen von Privathaushalten, wird das Ziel von Verteilnetzbetreibern, das Angebot und den Bedarf an elektrischer Energie möglichst gleichmäßig und prognostizierbar zu gestalten, zunehmend erschwert, da sich wetterabhängig starke Schwankungen in der Einspeisung von elektrischer Energie ergeben können. Das Ziel eines gleichmäßigen Angebots und Bedarf an elektrischer Energie liegt nicht Zuletzt darin begründet, dass das Angebot unmittelbar dem Konsum folgen muss, da elektrische Energie nicht in technisch sinnvoller Weise speicherbar ist.

Es wurde deshalb schon vorgeschlagen, ein in Zukunft zu erwartende größere Zahl an dezentralen Energiespeichern, insbesondere Akkumulatoren von Elektroautomobilen, dahingehend zu nutzen, das Angebot und den Bedarf an elektrischer Energie in einer Weise zu nivellieren, dass eine Aufladung von Akkumulatoren von derzeit nicht bewegten Elektroautomobilen dann erfolgt, wenn das Angebot an elektrischer Energie den Bedarf übersteigt. Umgekehrt ist an eine Entladung der Akkumulatoren von derzeit nicht bewegten Elektroautomobilen denkbar, wenn der Bedarf an elektrischer Energie das Angebot übersteigt. Eine solche Entladung von Akkumulatoren würde netzseitig eine Einspeisung von elektrischer Energie in das Verbundnetz bedeuten, welche wie eine durch derzeitige photovoltaische Anlagen veranlasste Einspeisung durch den Verteilnetzbetreiber vergütet werden könnte.

Ein mit dem erfindungsgemäßen Laderegler eingesetzter Energiespeicher könnte damit sowohl mikroökonomische als auch makroökonomische Vorteile bieten. Der erstgenannte Vorteil für den Abnehmer bestünde darin, dass eine Aufladung des Energiespeichers durch den erfindungsgemäßen Laderegler zu Tageszeiten erfolgen könnte, an denen der Stromtarif niedriger ist (zum Beispiel »Nachtstrom«), eine Entladung des Energiespeichers dagegen zu Tageszeiten, an denen der Stromtarif höher ist.

Eine Entladung und damit Einspeisung des »negativen Ladestroms« bzw. Entladestroms in das Verbundnetz würde in üblicher Weise durch den Verteilnetzbetreiber vergütet werden. Der makroökonomische Vorteil für den Netzbetreiber besteht wiederum in einer Nivellierung des Angebots und des Bedarfs an elektrischer Energie.

Für den erfindungsgemäßen Laderegler spielt die Richtung des Ladestroms im Übrigen keine Rolle. Maßgebend für die dem erfinderischen Laderegler zugedachte Funktion ist lediglich, dass der zeitliche Verlauf des Ladestroms vom Laderegler so eingestellt wird, dass einem Verbraucher-charakteristischen zeitlichen Verlauf des Laststroms entgegenwirkt wird.

Vorteilhafte Weiterbildungen der Erfindung sind in den Unteransprüchen angegeben.

Ein Ausführungsbeispiel mit weiteren Vorteilen und Ausgestaltungen der Erfindung wird im Folgenden anhand der Zeichnung näher erläutert.

Dabei zeigen:
- Fig. 1:: ein Strukturbild zur schematischen Darstellung von Funktionskomponenten einer beispielhaften Energieversorgungsinstallation eines Stromabnehmers; und;
- Fig. 2:: ein Strukturbild zur schematischen Darstellung möglicher Funktionskomponenten eines erfindungsgemäßen Ladereglers.

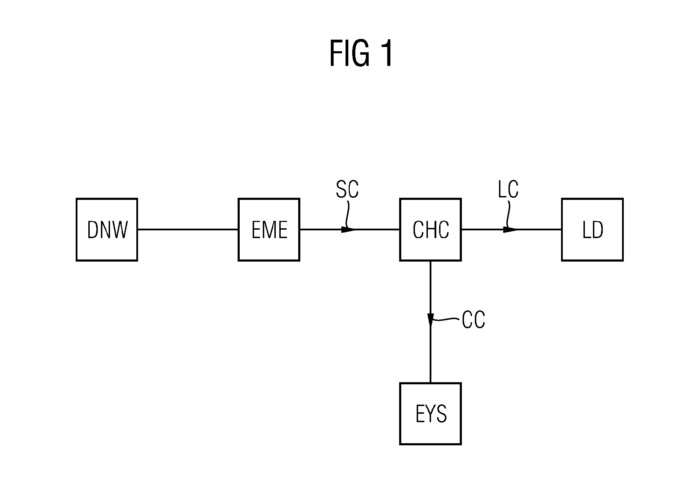

In Fig. 1 sind Funktionskomponenten einer beispielhaften Energieversorgungsinstallation eines Stromabnehmers dargestellt. Dabei wird über ein Verteilernetz DNW elektrische Energie bezogen. Das Verteilernetz DNW ist beispielsweise über einen - nicht dargestellten - Hauptverteileranschluss sowie über einen Stromzähler EME mit dem erfindungsgemäßen Laderegler CHC verbunden. Der erfindungsgemäße Laderegler CHC ist wiederum einem mindestens einen Verbraucher verbindenden Verbraucherverteiler LD vorgeschaltet.

Wie in der Zeichnung dargestellt, fließt verteilernetzseitig ein Bezugsstrom SC, welcher durch den Stromzähler EME als elektrische Energie erfasst wird.

Zwischen dem Laderegler CHC und dem Verbraucherverteiler LD fließt ein Laststrom LC, dessen Höhe und zeitlicher Verlauf durch die Anforderungen der am Verbraucherverteiler LD angeschlossenen - nicht dargestellten - Verbraucher bestimmt sind. Dieser Laststrom LC wird durch den Laderegler CHC erfasst und ausgewertet. Die Erfassung des Laststroms LC erfolgt gemäß einer ersten Ausführungsform durch Messung. Gemäß einer alternativen zweiten Ausführungsform erfolgt die Erfassung des Laststroms LC indirekt, anhand des Ladezustands des Energiespeichers. In dieser zweiten Ausführungsform wird der Laststrom dahingehend indirekt erfasst, indem über einen längeren Zeitraum ein Ladezustandsunterschied des Energiespeichers EYS erfasst wird. Diese zweite Ausführungsform ist insbesondere geeignet für eine im Folgenden erläuterte galvanische Trennung gemäß einer zweiten Betriebsart.

Als Ergebnis dieser Auswertung wird vom Laderegler CHC ein Ladestrom CC in Richtung eines Energiespeichers EYS eingestellt, so dass sich der Bezugsstrom SC als Summe des von den Verbrauchern geforderten Laststroms LC und des daraufhin eingestellten, auf die Spannung des Energiespeichers normierten Ladestroms CC ergibt.

Die Einstellung des Ladestroms CC wird durch den Laderegler CHC erfolgt dergestalt, dass einem verbraucher-charakteristischem zeitlichen Verlauf des Laststroms LC entgegengewirkt wird, sodass der verbraucher-charakteristische zeitliche Verlauf im Bezugsstrom SC so verfremdet ist, dass eine Auswertung des Bezugsstroms SC durch den Verteilernetzbetreiber DNW erschwert oder idealerweise unmöglich gemacht wird.

Der erfindungsgemäße Laderegler CHC ist derart beschaffen, dass aus dem zeitlichen und betragsmäßigen Verlauf des Bezugsstroms SC nicht auf den zeitlichen und betragsmäßigen Verlauf des Laststroms LC geschlossen werden kann, sondern nur auf einen längerfristigen Durchschnittsverbrauch.

Ein im Hauptverteileranschluss DNW fließender Bezugsstrom SC ergibt sich als Summe des Laststroms LC und eines auf die Spannung des Energiespeichers normierten Ladestroms CC.

Zur Erklärung des normierten Ladestroms wird im Folgenden von einer Netzspannung bzw. Niedrigspannung von 230 Volt auf Verbraucherseite sowie auf Netzseite ausgegangen. Weiterhin wird von einer Energiespeicherspannung von 12 Volt ausgegangen. Ein zu einem bestimmten Zeitpunkt von den Verbrauchern angeforderter Laststrom LC in Höhe von einem Ampere bei einer Spannung von 230 Volt führt bei einem normierten Ladestrom CC von 0,1 Ampere zu einem Bezugsstrom SC von 1,1 Ampere, der Summe der Höhe des Laststroms LC und des normierten Ladestroms CC.

Zur Normierung des Ladestroms CC wird der tatsächlich messbare Ladestrom CC mit einem Quotienten aus der Spannung des Energiespeichers und der Spannung auf Netzseite multipliziert. Im Umkehrschluss bestimmt sich der tatsächlich messbare Ladestrom CC, indem der normierte Ladestrom CC mit einem Quotienten aus der Spannung auf Netzseite und der Spannung des Energiespeichers multipliziert wird. Der tatsächlich messbare Ladestrom bei einer Energiespeicherspannung von 12 Volt und einer Netzspannung von 230 Volt ergibt sich im vorliegenden Beispiel zu 1,9167 Ampere.

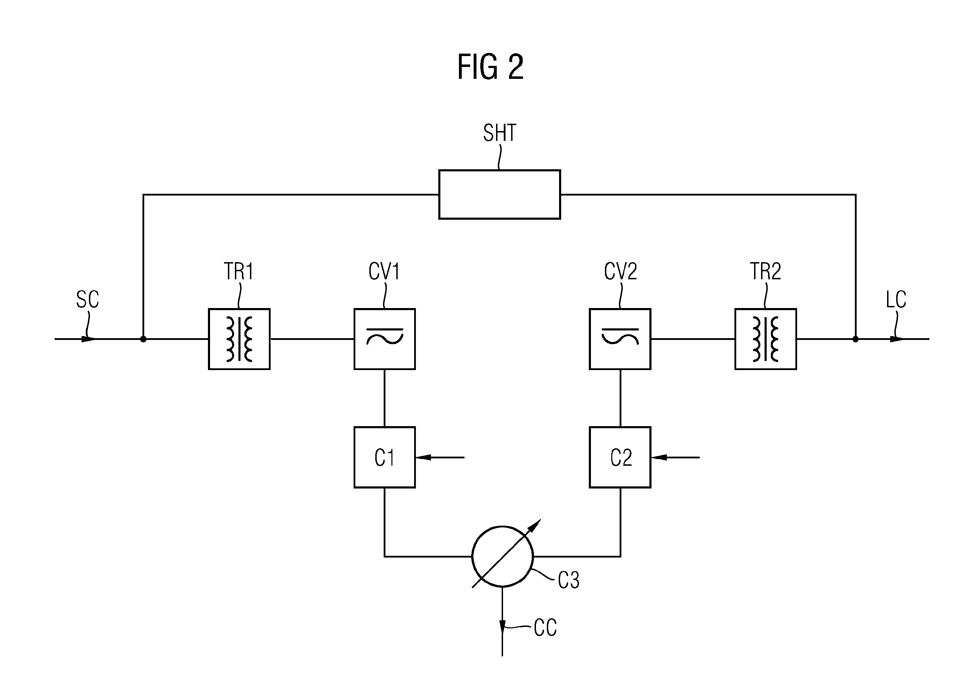

In Fig. 2 ist ein schematisches Prinzipschaltbild einer beispielhaften Ausführungsform des erfindungsgemäßen Ladereglers gezeigt. Die Erläuterung erfolgt unter weiterer Bezugnahme auf die Funktionseinheiten der Fig. 1.

Gemäß einer ersten Ausführungsform ist ein Nebenschlusswiderstand SHT vorgesehen, durch den der verteilernetzseitige Anschluss des Ladereglers CHC mit dem Verbraucherverteiler LD verbunden ist. Anhand eines Spannungsabfalls am Nebenschlusswiderstand SHT ist somit eine Differenz zwischen dem Bezugsstrom SC und dem Laststrom LC messbar.

Im Laderegler CHC wird des Weiteren der Laststrom LC erfasst. Vom Laderegler CHC wird außerdem der Ladezustand des Energiespeichers erfasst.

Im unteren Teil der Fig. 2 ist eine Umrichteranordnung vorgesehen, welche im Wesentlichen oder zumindest teilweise aus den folgenden Funktionskomponenten besteht.

Zunächst ist ein erster Transformator TR1 an einem Nebenzweig zu dem zum Nebenschlusswiderstand SHT führenden Zweig vorgesehen. Der erste Transformator TR1 ist dabei ebenfalls verteilernetzseitig mit dem Hauptanschluss verbunden. Der erste Transformator TR1 dient einer Transformation der Niederspannung in Höhe von 230 Volt auf eine für den Energiespeicher EYS vorgesehene Spannung, z. B. 12 Volt.

Der Ausgang des ersten Transformators TR1 wird einem Stromrichter CV1 zugeführt, welcher eine Gleichrichtung des Wechselstroms vornimmt. Über eine erste Regeleinrichtung C1 und über eine dritte Regeleinrichtung C3 wird ein entsprechend geregelter Ladestrom CC an den Energiespeicher EYS zugeführt.

In einem Entladebetrieb des Energiespeichers EYS wird ein entsprechend negativer Ladestrom CC, auch Entladestrom CC, über die dritte Regeleinrichtung C3 und über eine zweite Regeleinrichtung C2 an einen zweiten Stromrichter CV2 zugeführt. Der zweite Stromrichter CV2 nimmt eine Wechselrichtung des aus dem Energiespeichers EYS entnommen Gleichstrom vor. Es versteht sich von selbst, dass ein Lade- und Entladebetrieb des Ladereglers CHC gleichzeitig stattfinden kann, wobei die jeweiligen Ströme vorzeichenrichtig addiert werden und sich damit insgesamt eine zeitweise Entladung oder Ladung des Energiespeichers EYS ergibt.

Der durch den zweiten Stromrichter CV2 wechselgerichtete Strom wird einem zweiten Transformator TR2 zugeführt, dessen auf der Sekundärseite abgenommene Zweig mit dem vom Nebenschlusswiderstand SHT geführten Zweig zusammengeführt und in Richtung des Verbraucherverteilers LD als Laststrom LC geführt wird.

In einer Ausführungsform der Erfindung verfügt der Nebenschlusswiderstand SHT über einen durch den Ladestromregler CHC steuerbaren Schalter. Auch die in Fig. 2 in der unteren Ebene gezeigten einen Umrichter bildenden Funktionskomponenten sind über die Regeleinrichtung C1, C2, C3 an- und ausschaltbar.

Dies gestattet zwei Betriebsarten. Gemäß einer ersten Betriebsart, welche beispielsweise für einen Notbetrieb bei Ausfall der übrigen Funktionskomponenten vorgesehen sein kann, wird der Bezugsstrom SC komplett über den Nebenschlusswiderstand SHT geführt, sodass der Laststrom LC im wesentlichen mit dem Bezugsstrom SC identisch ist. Dieser Notbetrieb gestattet im Übrigen nicht die erfindungsgemäße Verschleierung des Verbraucher-charakteristischen zeitlichen Verlaufs des Laststroms LC.

In einer zweiten Betriebsart wird der Nebenschlusswiderstand SHT unterbrochen, sodass der Laderegler CHC im wesentlichen aus einem zentralen Umrichter besteht, bei dem von Verteilernetzseite lediglich eine Aufladung des Energiespeichers vorgesehen ist und von Laststromseite lediglich eine Entnahme von Strom aus dem Energiespeicher. Mit anderen Worten sieht diese Betriebsart eine vollständige galvanische Trennung des Hauptanschlusses von den Verbrauchern vor, so dass der zeitliche Verlauf des über das Verteilernetz bezogenen Stroms keinerlei Rückschlüsse auf einen Verbraucher zulässt, da der Bezugsstrom SC lediglich zum Laden des Energiespeicher EYS verwendet wird, während der Laststrom LC über die gezeigten Umrichtkomponenten C2, CV2, TR2 aus dem Energiespeicher EYS entnommen werden.

Auch bei einer zuletzt genannten galvanischen Trennung gemäß der zweiten Betriebsart ergibt sich der im Hauptverteileranschluss DNW fließende Bezugsstrom SC als Summe des Laststroms LC und des auf die Spannung des Energiespeichers EYS normierten Ladestroms CC, jedoch ist dieses Summe dann rein rechnerisch zu verstehen und nicht galvanisch bzw. physikalisch. In einem solchen Fall ist der Bezugsstrom SC beispielsweise konstant, während der auf die Spannung des Energiespeichers EYS normierte Ladestroms CC sich aus einer konstanten Komponente, dem »eigentlichen« Ladestrom, und einer zweiten Komponente, dem an die Verbraucher aus dem Energiespeicher EYS gelieferten Strom, zusammensetzt.

In dieser zweiten Betriebsart bietet sich eine indirekte Erfassung des Laststroms LC an, bei der über einen langen Zeitraum ein Ladezustandsunterschied detektiert wird.

In einem Mischbetrieb gemäß einer bevorzugten Ausführungsform der Erfindung ist vorgesehen, einen Teil des Bezugsstroms SC über den Nebenschlusswiderstand SHT und einen anderen Teil des Bezugsstroms SC über die Umrichteranordnung zu führen.

Eine Realisierung gemäß Figur 2 ist hierbei lediglich exemplarisch zu verstehen, da in der Praxis sehr viele Ausführungsformen zwischen einer geregelten galvanischen Verbindung und einer über Umrichter und Energiespeicher getrennten Verbindung möglich sind. Insbesondere ist auch eine Einstellung des Bezugsstroms SC über einen veränderbaren Nebenschlusswiderstand SHT denkbar.

Der Laderegler CHC enthält vorzugsweise einen - nicht dargestellten - Mikrorechner, welche aktuelle Bedarfsprofile mit vergangenen Bedarfsprofilen vergleicht, um eine zeitnahe Regelung des Ladestroms CC hinsichtlich des erfindungsgemäßen Ziels einer Verschleierung des charakteristischen zeitlichen Verlauf des Laststroms LC im Bezugsstrom zu erreichen. Ein solcher Mikrorechner kann auch jeweils in den einzelnen Regeleinrichtungen C1, C2, C3 vorgesehen sein.

Die jeweilige Ausführungsform des erfindungsgemäßen Ladereglers CHC entspricht im weitesten Sinne einer Technik, welche auch für unterbrechungsfreie Stromversorgungen bekannt ist, mit der Ausnahme, dass das Ziel der Regelung nicht wie bei der unterbrechungsfreien Stromversorgung eine Konstanthaltung der Spannung auf Sekundärseite ist, sondern vielmehr, den zeitlichen Verlauf des Ladestroms CC so einzustellen, dass einem verbraucher-charakteristischen zeitlichen Verlauf des Laststroms LC entgegengewirkt wird und somit ein Bezugsstrom SC bezogen wird, aus dem ein verbraucher-charakteristischer zeitlicher Verlauf des Laststroms LC nicht messbar ist.

Das Ziel des Regelalgorithmus des Ladereglers CHC ist es also, die dem Verteilernetz entnommene Energie und damit den Bezugsstrom SC möglichst vollständig vom aktuellen tatsächlichen Energieverbrauch und damit den Laststrom LC zu entkoppeln.

Als sehr einfacher Regelalgorithmus wird z.B. ein konstanter Bezugsstrom CC eingestellt, z.B. entsprechend dem Durchschnittsverbrauch der letzten Woche, mit Ausnahmebehandlung im Falle eines Über- oder Unterschreitens einer zu haltenden Kapazität des Energiespeichers EYS.

Optional oder zusätzlich wird ein traditioneller Regelalgorithmus mit sehr starker Lade-Hysterese eingestellt.

Optional oder zusätzlich wird die Entnahme des Bezugsstroms SC nur in diskreten »Energiepaketen« zu diskreten Zeitpunkten eingestellt, z.B. einmal je Stunde, wobei der Bezugsstrom CC nahezu ausschließlich als Ladestrom CC zum Laden des Energiespeichers EYS verzweigt wird. Hierbei wird abhängig von der Beschaffenheit des Energiespeichers EYS ein maximal möglicher Ladestrom CC bis zu einem zufälligen Ladeendstand zwischen 75% und 100% der Kapazität des Energiespeichers EYS entnommen.

Gemäß einer weiteren Ausführung ist vorgesehen, einen Regelalgorithmus vorzusehen, welcher zusätzlich eine Abhängigkeit von einem aktuellen Stromtarif berücksichtigt. Sinnvolle Ladegrenzen und Zeiträume hängen dabei vom erwarteten Verbrauchsprofil und der zur Verfügung stehenden Kapazität des Energiespeichers EYS ab.

## Patentansprüche

1. Laderegler,
angeordnet zwischen einem Hauptverteileranschluss (DNW) und einem mindestens einen Verbraucher verbindenden Verbraucherverteiler (LD),
wobei ein durch den mindestens einen Verbraucher (LD) fließender Laststrom (LC) erfasst wird,
wobei dem Laderegler (CHC) ein Energiespeicher (EYS) zugeordnet ist, dessen Ladezustand durch den Laderegler (CHC) erfasst wird,
wobei vom Laderegler (CHC) ein Ladestrom (CC) zwischen dem Laderegler (CHC) und dem Energiespeicher (EYS) einstellbar ist,
wobei ein im Hauptverteileranschluss (DNW) fließender Bezugsstrom (SC) sich als Summe des Laststroms (LC) und des auf die Spannung des Energiespeichers (EYS) normierten Ladestroms (CC) ergibt,
und wobei der zeitliche Verlauf des Ladestroms (CC) vom Laderegler (CHC) so eingestellt wird, dass einem Verbraucher-charakteristischen zeitlichen Verlauf des Laststroms (LC) entgegenwirkt wird.

2. Laderegler nach Anspruch 1,
**dadurch gekennzeichnet,**
**dass** der zeitliche Verlauf des Ladestroms (CC) so eingestellt wird, dass ein Verbraucher-charakteristischer Lastromverlauf (LC) so überlagert wird, so dass eine Rekonstruktion des verbraucher-charakteristischen Lastromverlaufs (LC) im Bezugsstrom (SC) nicht möglich ist.

3. Laderegler nach einem der vorgenannten Ansprüche, **dadurch gekennzeichnet,**
**dass** der zeitliche Verlauf des Ladestroms (CC) so eingestellt wird, dass die Verbraucher-charakteristischen Lastromverläufe im Bezugsstrom zumindest teilweise (LC) nivelliert werden.

4. Laderegler nach einem der vorgenannten Ansprüche,
**dadurch gekennzeichnet,**
**dass** der zeitliche Verlauf des Ladestroms (CC) so eingestellt wird, dass sich für den Bezugsstrom (SC) ein über eine vorgebbare Zeit ein zeitlich konstanter Wert einstellt.

5. Laderegler nach einem der vorgenannten Ansprüche,
**dadurch gekennzeichnet,**
**dass** der zeitliche Verlauf des Ladestroms (CC) gemäß einer Ladung des Energiespeichers (EYS) mit einer starken Lade-Hysterese eingestellt wird.

6. Laderegler nach einem der vorgenannten Ansprüche,
**dadurch gekennzeichnet,**
**dass** der zeitliche Verlauf des Ladestroms (CC) so eingestellt wird, dass der komplette Bezugsstrom (SC) über einen bestimmten Zeitraum konstant gehalten wird.

7. Laderegler nach einem der vorgenannten Ansprüche,
**dadurch gekennzeichnet,**
**dass** der zeitliche Verlauf des Ladestroms (CC) so eingestellt wird, dass der Energiespeicher (EYS) im Wesentlichen auf einem vorgebbaren Wert seiner Ladekapazität gehalten wird.

8. Laderegler nach einem der vorgenannten Ansprüche,
**dadurch gekennzeichnet,**
**dass** der durch den mindestens einen Verbraucher (LD) fließender Laststrom (LC) indirekt anhand des Ladezustands des Energiespeichers erfasst wird.

9. Elektroinstallation,
umfassend einen Laderegler nach einem der vorgenannten Ansprüche,
einen elektrischen Energiespeicher, und,
einen Stromzähler zur Fern-Übermittlung von Energieverbrauchswerten an einen Verteilnetzwerkbetreiber.
